# EUROPÄISCHE PATENTANMELDUNG

(11) **EP 0 952 534 A1**
(43) Veröffentlichungstag der Anmeldung: **27.10.1999**
(21) Anmeldenummer: 99107881.7
(22) Anmeldetag: 21.04.1999
(51) Int. Cl.: G06F 17/30, G06K 9/62

(54) **Verfahren zur automatisierten Regelgenerierung für die Klassifizierung von Daten, insbesondere Bilddaten**

(30) Priorität: 21.04.1998 EP 98107200
(71) Anmelder: GMD - FORSCHUNGSZENTRUM INFORMATIONSTECHNIK GMBH, D-53754 Sankt Augustin (DE)
(72) Erfinder: Peters, Liliane Dr., 53173 Bonn (DE); Malaviya, Ashutosh Dr. Yatra Corporation, Minneapolis, MN 55439 (US); Ivancic, Franjo, 41462 Neuss (DE)
(74) Vertreter: Hilleringmann, Jochen, Dipl.-Ing.

(57) **Zusammenfassung**

Das Verfahren klassifiziert Daten (Bild-Daten oder Datenbank-Daten) anhand von Merkmalen. Die Merkmale werden vom Benutzer gewählt und sind abhängig von der Anwendung. Die Eingabemerkmale werden vom Verfahren in eine interne Darstellung umgewandelt. Anhand dieser wird festgestellt: ob die Merkmale für die Klassifizierung von Bilddaten relevante Information enthalten, und ob die Anzahl der relevanten Merkmale ausreichend für die gewünschte Klassifizierung ist. Falls dies der Fall ist wird eine Regelbasis anhand unbekannter Bilddaten des selben Datentyps generiert. Unbekannte Bilddaten oder Datenbankeinträge können dann anhand der Regelbasis erkannt und klassifiziert werden. Die Regelbasis kann jeder Zeit teilweise oder ganz anhand von anderen, gleichen oder einer ergänzenden Menge von Merkmalen erweitert werden. So kann das Ergebnis des Verfahren durch das Ändern der Menge der Eingabemerkmale schrittweise optimiert werden.

## Beschreibung

Die Erfindung betrifft ein Verfahren zur automatisierten Regelgenerierung für die Klassifizierung von Daten, insbesondere Bilddaten.

Derartige Verfahren werden eingesetzt, um Daten (Bild-Daten oder Datenbank-Daten) anhand von Merkmalen zu klassifizieren.

Aus EP-A-0 672 995 ist ein Verfahren zur Mustererkennung unter Verwendung reduzierter Merkmalssätze bekannt, mit dem handschriftliche oder maschinengeschriebene bzw. gedruckte Zeichen erkannt werden, und zwar anhand von zwei gewichteten Merkmalsmatritzen. Zur Reduktion der Anzahl der Elemente dieser Matritzen wird ein genetischer Algorithmus verwendet.

Wie bei dem vorstehend beschriebenen bekannten Verfahren, so wird auch bei dem aus EP-A-0 727 755 bekannten Verfahren davon ausgegangen, daß die Trainingsdaten alle spezifischen Merkmale für eine Mustererkennung beinhalten. Die Erfahrung zeigt jedoch, daß dies nicht immer der Fall ist, weshalb die Festlegung der für die Klassifizierung erforderlichen Merkmale mitunter recht kompliziert ist.

Aus der DE-A-196 52 445, die auf eine vorangemeldete deutsche Patentanmeldung zurückgeht, ist ein Verfahren zur Erkennung von insbesondere chinesischen Schriftzeichen bekannt, bei dem das Rasterbild des Schriftzeichens in einen charakteristischen Merkmalsvektor überführt und mittels diesem klassifiziert wird, und zwar unter Ausnutzung einer hinsichtlich der Geschwindigkeit und Qualität besonders vorteilhaften Polygonrepräsentation der Zeichenkontur. Zur Bestimmung der Polygonrepräsentation werden Fuzzy-Membership-Funktionen eingesetzt. Die Klassifizierung erfolgt jedoch einzig und allein anhand der so gewonnen Polygonrepräsentation. Im übrigen werden keine weiteren Bedingungssätze zur Mustererkennung aufgestellt. Außerdem kann mit dem Verfahren auch nicht untersucht werden, ob die für die Klassifizierung vorgegebenen Merkmale ausreichend oder überbestimmt sind.

Der Erfindung liegt die Aufgabe zugrunde, ein Verfahren zur automatisierten Regelgenerierung für die Klassifizierung von Daten, insbesondere Bilddaten zu schaffen, das sowohl für Zeichen- als auch für Worterkennung sowie für Datenuntersuchung und -auswertung geeignet ist und bei dem eine Information darüber ausgegeben wird, ob die Merkmale für die Klassifizierung und Diskriminierung gegenüber anderen Prototypen ausreichend sind. In einem iterativen Prozeß soll dabei automatisch die Menge der zumindest erforderlichen Merkmale ermittelt werden.

Zur Lösung dieser Aufgabe wird mit der Erfindung ein Verfahren gemäß Anspruch 1 vorgeschlagen. Die Datenkomplex-Erkennung unter Zuhilfenahme eines derartigen Verfahrens ist in Anspruch 2 angegeben.

Das erfindungsgemäße Verfahren klassifiziert Daten (Bild-Daten oder Datenbank-Daten) anhand von Merkmalen. Die Merkmale werden vom Benutzer gewählt und sind abhängig von der Anwendung. Die Eingabemerkmale werden vom Verfahren in eine interne Darstellung umgewandelt. Anhand dieser wird festgestellt, ob die Merkmale für die Klassifizierung von Bilddaten relevante Information enthalten, und ob die Anzahl der relevanten Merkmale ausreichend für die gewünschte Klassifizierung ist. Falls dies der Fall ist wird eine Regelbasis anhand unbekannter Bilddaten des selben Datentyps generiert. Unbekannte Bilddaten oder Datenbankeinträge können dann anhand der Regelbasis erkannt und klassifiziert werden. Die Regelbasis kann jeder Zeit teilweise oder ganz anhand von anderen, gleichen oder einer ergänzenden Menge von Merkmalen erweitert werden. So kann das Ergebnis des Verfahren durch das Ändern der Menge der Eingabemerkmale schrittweise optimiert werden. Das erfindungsgemäße Verfahren ist nicht nur für Bilddaten anwendbar, sondern allgemein für "Datenstrukturen". Eine Variante des erfindungsgemäßen Verfahrens ist im beiliegenden Anspruch 1 dargelegt. Anspruch 2 bezieht sich auf die Verwendung des erfindungsgemäß generierten Klassifikators für die Datenstruktur-Erkennung.

Bei dem erfindungsgemäßen Verfahren wird mittels insbesondere Fuzzifizierungsregeln und -gesetzmäßigkeiten aus den Werten der Analysemerkmale eine Regelbasis bzw. ein Satz von Bedingungen aufgestellt, bei deren Erfüllung mit einer vorgegebenen Mindestwahrscheinlichkeit davon ausgegangen werden kann, daß es sich bei dem untersuchten Datenkomplex um einen erkannten handelt. Dazu wird in den erfindungsgemäß erstellten Klassifikator eine Vielzahl von Varianten der zu erkennenden Datenkomplexe eingegeben. Die Varianten werden gemäß den vorgegebenen Merkmalen analysiert, wobei jedem Merkmal ein Wert innerhalb eines vorgebbaren Wertebereichs (0% bis 100%) zugeordnet wird. Durch Vergleich, der Werte der Analysemerkmale sämtlicher Varianten eines Datenkomplexes kann dann untersucht werden, welche Merkmale mit welchen Wertebereichen am häufigsten auftreten. Daraus schlußfolgert man dann, daß diese Merkmale mit den betreffenden Werten charakteristisch sind für den Datenkomplex. Die so aufgestellten Bedingungssätze werden, sofern möglich komprimiert, indem Merkmale, die anhand der vorherigen Untersuchung als nicht relevant bzw. weniger relevant erachtet worden sind, nicht berücksichtigt werden. Dadurch ergibt sich ein komprimierter bzw. verkürzter Bedingungssatz. Wird dieses Procedere für sämtliche Varianten sämtlicher vorgegebener Datenkomplexe durchgeführt, so ergeben sich mehrere Bedingungssätze, die in obiger Weise komprimiert und damit verkürzt sind. Jetzt werden diese Bedingungssätze untereinander verglichen, um herauszufinden, inwieweit die einzelnen Merkmale tatsächlich eindeutig auf bestimmte Datenkomplexe hinweisen. Tritt beispielsweise der Fall auf, daß bei zwei unterschiedlichen Datenkomplexen ein Merkmal mit im wesentlichen gleicher Häufigkeit bzw. mit im wesentlichen gleicher Gewichtung auftaucht, so kann die gesamte Gruppe von Bedingungssätze um dieses Merkmal bzw. um diese Bedingungen gekürzt werden. Damit verkürzen sich sämtliche Bedingungssätze. Auf diese Weise wird der Klassifikator optimiert, wobei erfindungsgemäß auch angegeben wird, ob die noch verbleibenden Merkmale ausreichend sind, um eindeutige oder mit einer Mindestwahrscheinlichkeit als eindeutig zu treffende Ergebnisse für die Datenkomplex-Erkennung gewonnen werden können. So kann beispielsweise der Fall eintreten, daß das erfindungsgemäße Verfahren mit der Feststellung endet, daß die aufgestellten Merkmale zur Spezifikation der Datenkomplexe nicht ausreichend sind bzw. welche der vorgegebenen Merkmale tatsächlich benötigt werden. Im erstgenannten Fall kann in einem zweiten Schritt durch Vorgabe neuer Merkmale der Klassifikator neu erstellt werden.

Nachfolgend werden anhand der Figuren Ausführungsbeispiele der Erfindung näher erläutert. Dabei beziehen sich die Fign. 1 und 2 auf ein erstes und die Fign. 3 bis 6 auf ein zweites Ausführungsbeispiel.

### 1.1 Verfahren

Dieses Verfahren basierte auf der Auswertung bestimmter Merkmale, die in diesem Ausführungsbeispiel in Bilddaten vorhanden sind. Die Merkmale als solche sind für das Verfahren unwichtig. Das Verfahren ist in der Lage selbst festzustellen ob, die bei der Eingabe gegebene Merkmale für die Klassifizierung geeignet sind oder nicht. In der ersten Phase werden, die vom Benutzer gegebenen Merkmale in eine interne Datenrepräsentation umgewandelt, anhand der, die Güte des Merkmals zum Ausdruck kommt. In den Bilddaten, die als Beispiel vorgeschlagen werden, wurden die Merkmale anhand ihrer geometrischen, topologischen und statistischen Eigenschaften der Bilder (es handelt sich um handgeschriebene Städtenamen) gewählt. Das Verfahren hat wie jedes Klassifizierungsverfahren zwei Schritte. Der erste Schritt generiert automatisch anhand bekannter Bilddaten und der Eingabemerkmale Regeln, die den Zusammenhang der Merkmale zu den Bilddaten darstellt. Anhand dieser Regeln können in der zweiten Stufe des Verfahrens unbekannte Bilder erkannt und klassifiziert werden. Die einzelnen Schritte des Verfahrens sind:
- Einlesen der Eingabemerkmale und Konvertierung in ein internes Format
- Analyse der Eingabemerkmale für jede Klasse von Bildern
- Klassifikation der Eingabemerkmale
- Attribut-Generierung
- Regelgenerierung
- Regeldiskriminierung
- Klassifikation von Daten

### 1.2 Eingabe / Eingabeformat

Dem Verfahren wird als Eingabeformat eine Liste von Merkmalen (Namen), z. B. kreisförmig, kurz, lang, etc., und deren entsprechende Werte eingespeist werden. Für jedes Merkmal wird in einem internen Format dieser Wertebereich umdefiniert (abgebildet auf einem Bereich zwischen 0-100). So z. B. wird der maximale Wert in 100% und der minimale Wert in 0% dargestellt. Wird kein Wert angegeben, wird vom Verfahren das Minimum gleich Null und das Maximum gleich 100 betrachtet. Eine andere Möglichkeit der Bestimmung des Wertebereichs besteht in der Ermittlung des maximalen und minimalen Wertes aus den Trainingsdaten.

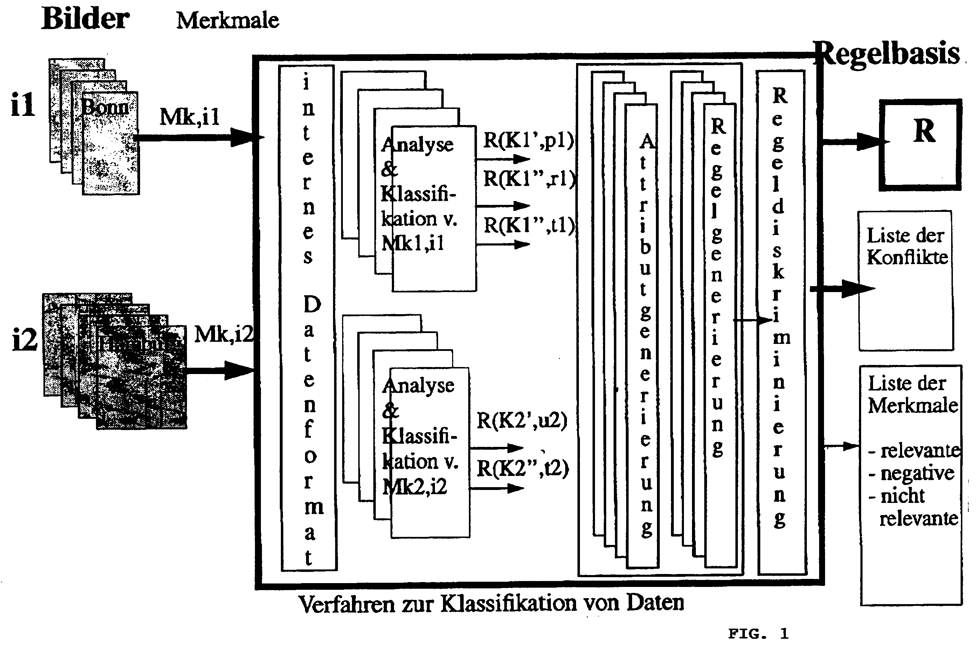

Als Beispiel wird eine Sequenz von i1 Bildern gewählt, die als Inhalt das Wort BONN enthalten, und eine Sequenz von i2 Bildern, die das Wort HAMBURG enthalten. Als Eingabemerkmale werden folgenden k Merkmale gewählt (s. Fig. 1).

Das bedeutet, daß dem Verfahren als Eingabe i1 Vektoren mit jeweils mk Merkmalen für die Regeln der Klasse von Bildern "Bonn" - im weiteren Mk,i1 genannt - und i2 Vektoren mit den gleichen Merkmalen mk für die Regeln der Klasse von Bildern "Hamburg" - im weiteren Mk,i2 genannt - gegeben werden. Während des Einlesens der einzelnen Werte der Merkmalvektoren werden die Werte auf den Zahlenbereich 0-100 abgebildet entsprechend ihrem natürlichen Wertebereich. Für das Beispiel enthält das Verfahren am Ende der ersten Bearbeitungsstufe zwei Merkmalgruppen Mk,i1 und Mk,i2 verschiedene Werte zwischen 0 und 100 enthalten.

### 1.3 Analyse der Eingabemerkmale für jede Klasse von Bildern

Dieses Beispiel umfaßt zwei Klassen von Bildern i1 und i2. Für diese zwei Beispiele werden die Eingabemerkmale Mk,i1 und Mk,i2 analysiert. Am Ende der Analyse Stufe wird festgelegt welche der Eingabemerkmale für die Klassifizierung von Bilddaten von Bedeutung sind und in welchen Bereichen die Merkmale ihre Werte haben. Damit wird eine Datenreduktion oder besser gesagt eine Reduktion der Merkmale erreicht. Als Auswahlkriterium der Merkmale wird die Verteilung der Werte der Merkmale im Definitionsbereich gewählt. Merkmale, die gleichmäßig über dem ganzen Wertebereich in der vorgegebenen Sequenz auftreten, sind nicht relevant für die Klassifizierung. Diese werden als nicht relevant markiert und dem Benutzer am Ende des Verfahrens mitgeteilt. Dadurch können Merkmale auch auf ihre Eigenschaften als Diskriminatoren bewertet werden. Merkmale, die immer den Wert Null haben, werden als "negative" Merkmale gekennzeichnet und werden in der zweiten Stufe des Verfahrens benutzt. Merkmale, die sich um gewisse Werte innerhalb des Definitionsbereichs sammeln (Clustern) heißen "relevante" Merkmale und werden für die erste Stufe der Regelgenerierung benötigt. Um so konzentrierter die Verteilung der einzelnen Werte der relevanten Merkmale im Definitionsbereich ist, desto besser (relevanter) wird das Merkmal für die Klassifizierung. Für jedes Merkmal Mk,i1 wird die Auswahlfunktion berechnet. Die Auswahlfunktion wird aus dem Durchschnittswert des Merkmals und dessen Streuung für die gegebene Sequenz von Bildern i1 berechnet. Es werden die ersten ml Merkmale Ml,i1 gewählt die einen hohen Wert der Auswahlfunktion aufweisen. Das Gleiche wird für die Mk,i2 und die Bilder i2 berechnet.

Durch diese Analyse kann die Anzahl der Merkmale reduziert werden, was zu einem späteren Zeitpunkt zu einer schnellen Klassifizierung führen kann. Die zwei Sequenzen von Bildern i1 und i2 enthalten jetzt drei Gruppen von Merkmalen, das heißt der Merkmalvektor Mk,i1 wurde in 3 Gruppen aufgeteilt: l1 Merkmale, die negativ sind (Ml1,i1), n1 Merkmale, die nicht relevant sind (Mn1, i1), und m1 relevante Merkmale (Mm1,i1). Für die Bilddaten i2 ist die Aufteilung: Ml2,i2, Mn2,i2 und Mm2, i2.

### 1.4 Klassifikation von Merkmalen

Der nächste Schritt ist die getrennte Klassifikation der Merkmale Mm1,i1 und Mm2,i2. Im weiteren wird nur die Klassifikation der Klassifikation der i1 Merkmalvektoren Mm1,i1 gezeigt. Für Mm1,i2 ist das Verfahren analog.

Um die Komplexität der Regelgenerierung zu reduzieren, wird eines der Merkmale, z. B. m1,i1 als Unterklasse gewählt. Das bedeutet, daß die Merkmalvektoren in mehrere Gruppen abhängig von den Werten des Merkmals m1,i1 eingeteilt werden. Unter der Annahme in diesem Beispiel, daß das Merkmal M1,i1 3 unterschiedliche Werte m1', m1'', und m1''' hat, dann kann der Mm1,i1 in drei Gruppen aufgeteilt werden: Mm1',i1 Mm1'',i1 und Mm1''', i1. Die drei Gruppen enthalten jeweils m1-1 Elemente. Für jede dieser drei Gruppen werden die Merkmalvektoren getrennt klassifiziert. Der Ablauf wird im folgenden nur für eine Gruppe Mm1',i1 vorgestellt. Die Merkmalvektoren Mm1',i1 werden in Klassen aufgeteilt. Am Ende der Aufteilung wurden K1' Klassen gefunden jeweils mit einem Zentrumsvektor Zm1',k1. Das Zentrum wird aus den Mittelwerten der beteiligten i Merkmalvektoren berechnet.

Von den m1' Merkmalen des jeweiligen Zentrumsvektors sollen nur die relevantesten Merkmale gewählt werden. Es werden, die Merkmale gewählt, die sehr nahe am Zentrum des Clusters liegen. Dafür wird ein gewichtetes Maß des Abstandes der einzelnen Merkmalkomponenten zum Clusterzentrum berechnet. Die Merkmale werden anhand dieses Maßes sortiert. Es werden die ersten p1' Merkmale gewählt. Die Anzahl der Komponenten wird anhand der gewünschten Rechenzeit und Güte der Klassifikation gewählt. Nachdem die Anzahl der Merkmale auf p1' von m1' reduziert wurde, wird das fuzzy c-means Verfahren erneut für Mp1',i1 durchgeführt. Die neue Anzahl von Clustern K1'entspricht der gefundenen Regelanzahl und die Anzahl p1' der Merkmalauswahl. Die Zentren der Clustern Zp1',k1 stellen die Regel als Vektor dar.

Die gleiche Bearbeitungsstufe wird auch für Mm1'',i1 und Mm1''',i1 durchgeführt. Am Ende des Prozesses wurde für die Merkmale Mm1,i1 der Bilder i1 eine Anzahl von Regeln gefunden, die der Summe Kp1', Kr1'', Kt1''' entspricht. Die Anzahl der beteiligten Merkmalen an den einzelnen Regelgruppen ist p1', r1' und t1'.

Diese Regelgenerierung wird auch für Bilder i2 durchgeführt. Am Ende des Prozesses wird für die Merkmale Mm2, i2 der Bilder i2 eine Anzahl von Regeln gefunden, die zum Beispiel der Summe Ko2', Ku2'', entspricht und die entsprechende Anzahl von Merkmalen den o2' und u2'.

### 1.5 Attribut-Generierung

Zu diesem Zeitpunkt ist die Anzahl der Regeln und die Anzahl der Merkmale festgelegt. Da die Werte der Merkmale des jeweiligen Clusterzentrums nicht dem maximalen Wert des Merkmals entspricht, muß dieser Wert mit Hilfe von Attributen definiert werden. Der Bereich der möglichen Werte eines jedes Merkmals kann in mehrere Bereiche unterteilt werden. Es werden 11 gleichmäßige Unterbereiche definiert: null, sehr sehr niedrig, sehr niedrig, mittel-niedrig, mittel, mittel-hoch, hoch, sehr hoch, sehr sehr hoch, perfekt.

Für jedes gewähltes Merkmal der Menge p1, r1,t1 für die Bilder i1 und o2, u2 für die Bilder i2 wird das Histogramm der Eingabewerte berechnet. Dieses wird auf die Attributklassen abgebildet. Es können auch neue Attribute entstehen durch die Zusammensetzung der einzelnen Attribute, z. B. ein Histogramm, das Werte in den Bereichen hoch, sehr hoch, sehr sehr hoch und perfekt aufweist wird dazu führen, daß ein neues Attribut "besser als hoch" generiert wird.

Am Ende dieser Stufe werden die Werte der gewählten Merkmale der Clusterzentren mit Attributen ersetzt.

### 1.6 Regelgenerierung

Jetzt erfolgt die Generierung der einzelnen Regeln. Die Generierung erfolgt durch die Umwandlung der Clusterzentren und deren Merkmale in syntaktische Regeln, die mit Hilfe des Operators "und" verknüpft werden.

### 1.7 Regeldiskriminierung

Bis jetzt wurden getrennt Regeln für die Untergruppen der Bilder i1 und i2. Es wurde nicht überprüft ob für zwei unterschiedliche Bilder zwei gleiche Regeln entstanden sind. Dafür müssen die Regeln auf Konsistenz oder Redundanz geprüft werden.
- Nimmt man an, daß anhand des Generierungsprozesses für die Bilder i1 und i2 R Regeln generiert wurden, muß jetzt jede einzelne Regel mit allen anderen überprüft werden. Es können folgende Fälle auftreten. Falls zwei Regeln redundant sind, also beide beschreiben ein Bild der Klasse 1 mit den gleichen Merkmalen, dann werden die unterschiedlichen Attribute zusammengefügt (siehe Generierung von Attributen) und eine der Regeln wird gelöscht.
- Falls zwei Regeln überlappend sind, aber unterschiedlicher Bilder Klassen gehören, z. B. Bonn und Hamburg, dann muß dieser Konflikt durch Attribute oder zusätzliche Merkmale gelöst werden. Für die überlappenden Merkmale werden die Attribute überprüft.
   - Falls der Abstand zwischen den Attributen mindestens zwei Werten bzw. Unterbereichen (da die Unterbereiche überlappend definiert sind) entspricht, dann sind die Regeln stark trennbar und die Klassifizierung kann durchgeführt werden.
   - Falls die Attribute nicht den notwendigen Abstand haben, müssen negativen Merkmale (siehe Analyse der Eingabemerkmale für jede Klasse) einzeln dazu genommen werden. Auch in diesem Fall werden die jeweiligen Attribute verglichen. Sind die Attribute trennbar, das heißt sie haben einen Abstand zwischen den Werten von mindestens zwei Unterbereichen, sind die Regeln schwach trennbar und die Klassifizierung kann durchgeführt werden. Die neu gewählten Merkmale werden der Regel mit Hilfe des Operators "und" zugefügt. Sind die Attribute auch nicht trennbar, dann ist entweder die Anzahl der gewählten Merkmale oder deren Auswahl nicht geeignet für die Klassifizierung. Die Konfliktregeln werden an der Ausgabe gemeldet.

Die Regelbasis wird solange überprüft, bis alle Konflikte gelöst sind oder zwei Durchläufe hintereinander keine Verbesserung bringen.

Am Ende dieser Stufe wird eine konfliktfreie Regelbasis ausgegeben sowie die Liste ungelöster Konflikte, falls solche gefunden wurden.

Es sei angenommen, daß man drei Gruppen von Bilder hat: i1 Bilder für Bonn, i2 Bilder für Hamburg und i3 Bilder für Homburg. Anhand der Eingabemerkmale gab es am Ende der Regeldiskriminierung unlösbare Konflikte zwischen den Regeln für die Bilder i2 (Hamburg) und i3 Homburg. Diese Konflikte können gelöst werden, indem ein Merkmal "Kreis" hinzugefügt wird, der bei den Bildern Homburg vorhanden ist, aber nicht bei den Bildern Hamburg. Danach werden erneut die Schritte: Analyse, Klassifikation der Merkmale, Attribut Generierung, Regelgenerierung für die Bilder i2 und i3 durchgeführt. Und es werden neue Regel generiert. Die Regeln für i1 bleiben erhalten. Der Schritt Regeldiskriminierung wird aber für die ganze Regelbasis durchgeführt also auch für die Regeln der Bilder i1. Auf diese Weise kann die Regelbasis erweitert oder für gewisse Regelsätze optimiert werden, ohne das ganze Verfahren von Beginn an zu wiederholen.

### 1.8 Klassifizierung von Bildern

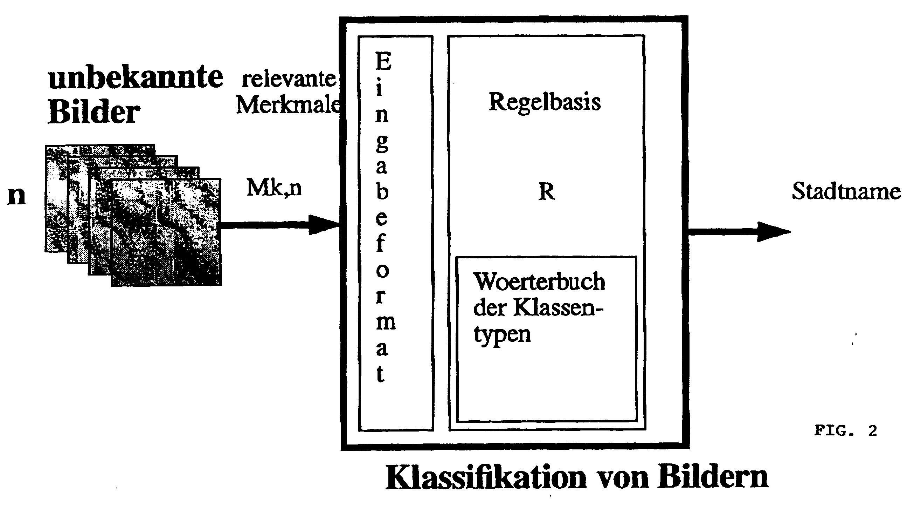

Anhand der generierten Regelbasis können jetzt unbekannte Bilder klassifiziert werden (s. Fig. 2). Es werden alle in der Regelbasis vorhandenen Merkmalen als Eingabe dem Verfahren gegeben und dieser berechnet den Abstand zu den einzelnen Regeln. Die Regel mit dem kleinsten Abstand entspricht der gefundenen Klasse also im gegebenen Beispiel dem Stadtnamen.

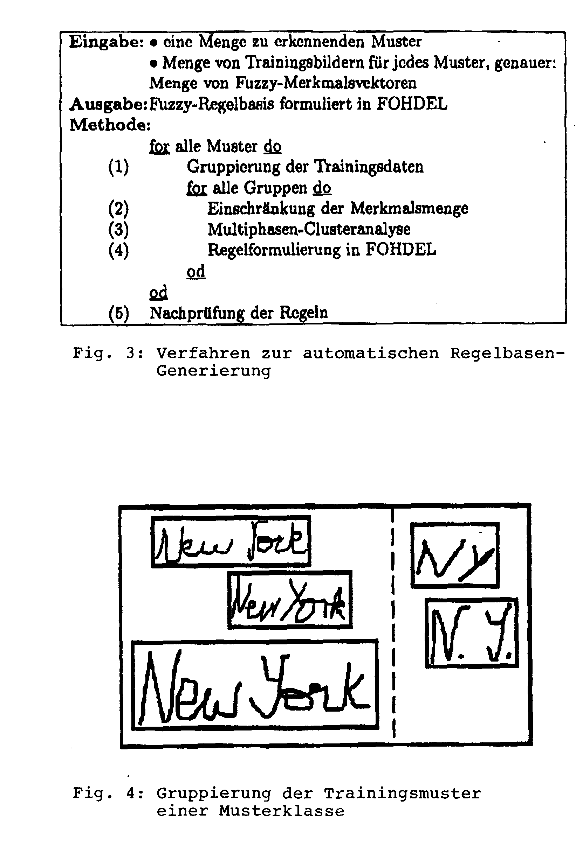

Nachfolgend wird anhand der Fign. 3 bis 6 ein weiteres Ausführungsbeispiel beschrieben.

### 2.1 Problembeschreibung und Anwendungen

Zunächst soll nochmals die angegangene Problematik näher gebracht werden. Desweiteren sollen einige typische Anwendungsszenarien zur besseren Verdeutlichung dargestellt werden. Grob gesagt handelt es sich um verschiedenartige Mustererkennungsprobleme (Datenkomplex-Erkennung). Es gibt zahlreiche verschiedene Ansätze, Mustererkennungsprobleme anzugehen; bis heute jedoch ist es nicht gelungen, die Mustererkennungsqualitäten des Menschen maschinell nachzubilden.

Der mit dieser Anmeldung verfolgte Ansatz basiert auf einem regelbasierten System, welches weiterhin die Vorzüge der Fuzzy-Logik zur Mustererkennung benutzt. Regelbasierte Systeme klassifizieren unbekannte Muster auf der Grundlage von einigen, in einer Beschreibungssprache formulierten, Regeln, die in der Regelbasis des Systems zusammengefaßt sind. Zu diesem Zweck ist von den Erfindern die Fuzzy-Beschreibungssprache FOHDEL entwickelt worden.

Oft sind die Regeln eines regelbasierten Systems, das auf Fuzzy-Logik basiert, aufgebaut auf dem Wissen eines menschlichen Experten. Die vom Experten aufgestellten Regeln werden dann meist mittels einer "trial-and-error"-Methode verfeinert. Je komplexer jedoch ein System ist, desto schwieriger ist die genaue Vorhersage, wie das System auf die änderungen reagieren wird. Weiterhin handelt es sich beim Entwurf komplexer Systeme um einen äußerst langwierigen Prozeß, der zudem nicht eine optimale Lösung garantiert. Deshalb ist es ein großes Anliegen vieler Wissenschaftler auf diesem Gebiet, einen Ansatz zu finden, der eine automatisierte Regelgenerierung ermöglicht. Diese Zielsetzung ist bis heute immer noch nicht befriedigend gelöst.

Die folgende Beschreibung stellt einen neuartigen Ansatz zur Lösung dieser Problematik dar.

Die meisten bisherigen Verfahrensweisen basieren auf separatistischen Ansätzen, die Muster klassifizieren, indem sie die Unterschiede der verschiedenen Musterklassen hervorheben. Der hier präsentierte Ansatz versucht Muster zu klassifizieren, indem er sich auf die charakteristischen Besonderheiten der jeweiligen Musterklasse bezieht. Ein weiterer Vorteil der Erfindung ist es, daß festgestellt werden kann, ob die vorhandenen Merkmale ausreichend sind, um die verschiedenen Muster korrekt zu klassifizieren. Bevor das Ausführungsbeispiel nun eingeführt wird, sollen noch einige mögliche Anwendungsfelder für die Erfindung vorgestellt werden.

Das hier beschriebene System wurde zur Erkennung von Handschrift implementiert. Das bekannteste Anwendungsfeld der Off-Line-Handschrifterkennung ist das automatische Adreßlesen, welches zum Beispiel von der Post benutzt wird. Dabei wird bei einem eingehenden Brief zunächst der Bereich des Briefumschlages gesucht, der die Empfangsadresse trägt. Nachdem das entsprechende Adreßfeld gefunden wurde, muß es automatisch gelesen werden. Dabei ist besonders die Erkennung der zusammenhängenden Handschrift eine schwer zu lösende Aufgabe.

Es ist ebenfalls möglich, das System für andere Mustererkennungsprobleme einzusetzen, die keine Verbindung zur Schrifterkennung aufweisen. Das System kann auch zur Suche in großen Datenmengen genutzt werden (Datenkomplex-Erkennung), da auch dies als "Mustererkennung" angesehen werden kann. Für eine derartige Portierung des Systems auf andere Problemfelder ist gegebenenfalls nur eine Erweiterung der Merkmalsmenge notwendig. Es kann nämlich passieren, daß für die neue Applikation ein neues Merkmal notwendig ist, welches bisher nicht notwendig war, um zwei verschiedenartige Musterklassen zu unterscheiden.

Nachdem nun einige mögliche Anwendungsfelder für das Klassifikator-Generationsverfahren beschrieben wurden, wird dieses nun vorgestellt. Die automatische Regelgenerierung basiert auf einigen Trainingsdaten, die durch Fuzzy-Clusteranalysen bearbeitet werden. Aufgrund der hohen Dimensionsanzahl der Eingabedaten wird eine sogenannte mehrphasige Clusteranalyse eingeführt.

Die Vorgehensweise, die in zwei Teile aufgeteilt ist, ist in Fig. 1 zusammengefaßt. Der erste Teil generiert eine anfängliche Regelbasis, wobei zunächst Regeln für jede einzelne Musterklasse individuell erzeugt werden (Schritte 1 - 4). Jede Regel besteht aus einigen Merkmalen, die die Musterklasse beschreiben. Es werden linguistische Terme zu den Merkmalen assoziiert, um deren Qualität in der betrachteten Musterklasse zu präzisieren. Im zweiten Teil (Schritt 5) werden die generierten Regeln nachgeprüft, um mögliche Überlappungen der Regeln, sogenannte Regelkonflikte, aufzufinden. Die überlappenden Regeln werden verändert, genauer gesagt erweitert, bis eine gewisse Unterscheidbarkeit erreicht ist oder aber die Merkmale nicht ausreichend sind, um die Musterklassen voneinander zu trennen. In diesem Fall ist es notwendig, daß der Benutzer weitere Merkmale hinzufügt oder aber mehr Kontextinformationen zur Verfügung hat.

Das Verfahren schreibt als Ausgabe direkt eine Regelbasis, die in der Sprache FOHDEL formuliert ist.

### 2.2 Lernen individueller Eigenschaften

Der zuvor erwähnte erste Teil des Verfahrens basiert auf einer mehrphasigen Clusteranalyse, die auch Multiphasen-Clusteranalyse genannt wird, zum Lernen von individuellen Eigenschaften verschiedener Muster. Es wird eine anfängliche Regelbasis erstellt, die Regeln für die Musterklassen individuell erzeugt, wobei jeweils eine unbekannte Anzahl von Trainingsdaten pro Musterklasse benutzt wird. Jedes Trainingsdatum korrespondiert zu einem Merkmalsvektor, der die jeweiligen Fuzzy-Zugehörigkeitswerte des Datums zu allen vorgegebenen Klassifizierungsmerkmalen beinhaltet.

Die Anzahl der Musterklassen und die der Merkmale ist sehr hoch; dadurch wird die Berechnung äußerst aufwendig, da jeweils mehrere Merkmale pro Musterklasse zu betrachten sind. Demnach wird auch die Anzahl der zu berechnenden Cluster sehr hoch. Um den Regelgenerierungsprozeß in einer gewissen Zeit zu beenden, werden zunächst einige Schritte zur Datenreduktion eingeführt.

### 2.2.1 Gruppierung der Trainingsdaten

Einige globale Merkmale, wie zum Beispiel Segmentierungsinformationen oder die Größe des Eingabebildes, werden in diesem ersten Reduktionsschritt verwendet, um allgemeine Vermutungen über die Natur der Cluster anzustellen. Die Erfinder teilen die Trainingsdaten einer Musterklasse in verschiedene Gruppen entsprechend eines oder mehrerer globaler Merkmale ein. Jede so gebildete, nichtleere Gruppe von Trainingsmustern wird einzeln bei den später folgenden Schritten, insbesondere der Clusteranalyse, betrachtet. Durch diese Gruppierung der Trainingsmuster einer Musterklasse ist die Anzahl der Trainingsmuster pro Clusteranalyse somit reduziert worden, andererseits ist die Anzahl der Clusteranalysen pro Musterklasse erhöht worden.

Die Wahl der globalen Merkmale, die zur Einteilung der Trainingsmuster in die Gruppen betrachtet werden, sind anwendungsspezifisch auszuwählen, also nicht vorgegeben. Es ist denkbar, de facto keine Gruppierung vorzunehmen, indem alle Trainingsmuster in eine spezielle Gruppe aufgenommen werden. Oft jedoch sind die Trainingsmuster einer Musterklasse so verschieden, daß eine Gruppierung nützlich ist.

Als Beispiel betrachte man Fig. 4. Die Musterklasse besteht aus der Zeichenkette "New York" als ein mögliches Objekt eines postalen Handschrifterkennungssystems. Es gibt allerdings zwei verschiedene Arten diese Musterklasse zu spezifizieren, nämlich einmal durch das vollständige Ausschreiben des Stadtnamens "New York", und andererseits durch die weitverbreitete Abkürzung "NY". Die Unterschiede dieser zwei Unterklassen der gemeinsamen Musterklasse sind so prägnant, daß eine Aufteilung der Trainingsmuster durch Betrachten globaler Merkmale möglich ist.

### 2.2.2 Einschränkung der Merkmalsmenge

Nachdem im ersten Schritt die Anzahl der Trainingsmuster reduziert wurde, wird nun die Anzahl der Merkmale, die zur Clusteranalyse betrachtet werden, vermindert. Üblicherweise ist die Anzahl der lokalen Merkmale, die ein Muster beschreiben, sehr hoch. In einer Anwendung unseres Systems haben die Erfinder ungefähr 130 verschiedene Merkmale pro Muster berechnet. Diese Merkmale werden als Variablen zur Clusteranalyse benutzt. Mathematisch gesehen entspricht somit jedes Merkmal einer Dimension im Merkmalsraum.

Ein Problem stellt nun die Bereitstellung von ausreichend vielen Trainingsmustern dar. Ein effizientes Verfahren sollte möglichst wenig Trainingsmuster benötigen, so zum Beispiel 100 Trainingsmuster pro Musterklasse. Betrachtet man nun, daß man 100 Trainingsvektoren in einem 130-dimensionalen Merkmalsraum zur Verfügung hat, so ist klar, daß keine effiziente Clusteranalyse vorgenommen werden kann. Die enormen Abweichungen von unwichtigen Merkmalen behindern eine effektive Clusteranalyse. Wenn hier von "unwichtigen Merkmalen" die Rede ist, so ist natürlich klar, daß dies nur lokal, bezogen auf die betrachtete Gruppe einer Musterklasse, gemeint sein kann. In einer anderen Gruppe einer anderen Musterklasse, vielleicht sogar derselben Musterklasse, kann dieses Merkmal eine äußerst wichtige Rolle spielen. Daher kann dieser Schritt, die Einschränkung der Merkmalsmenge, nur lokal innerhalb einer Gruppe einer Musterklasse vollzogen werden.

Bei Mustererkennungssystemen ist nicht nur die Erkennungsrate wichtig, sondern manchmal auch die Zeit, die pro Erkennungsschritt benötigt wird. In Realzeit-Anwendungen dürfen zum Beispiel gewisse maximale Erkennungszeiten nicht überschritten werden. Die Erkennungsgeschwindigkeit des hier präsentierten Systems hängt auch von der Bewertung der Regeln des Systems ab, die hier formuliert werden. Je weniger Regeln es gibt und je kürzer diese sind, desto schneller läßt sich ein Muster klassifizieren. Daher wird in diesem Schritt versucht, die Merkmalsmenge so zu beschränken, daß nur Merkmale betrachtet werden, die eine hohe Wahrscheinlichkeit zur Aufnahme in eine Regel der betrachteten Gruppe besitzen. Außerdem ist das Ziel der mehrphasigen Clusteranalyse, wie bereits erwähnt, die individuellen Eigenschaften einer Musterklasse zu extrahieren. Da die Merkmale auf eine fuzzy Art und Weise berechnet werden, ergibt sich, daß spezielle Eigenschaften eines Trainingsmusters durch hohe Zugehörigkeitswerte dieses Musters bezüglich eines Merkmales ausgedrückt werden. Um die folgende Clusteranalyse so effizient wie möglich zu gestalten, werden hier die Merkmale zur Weiterbetrachtung ausgesucht, die bei den Trainingsmustern dieser Gruppe zu hohen Zugehörigkeitswerten führen.

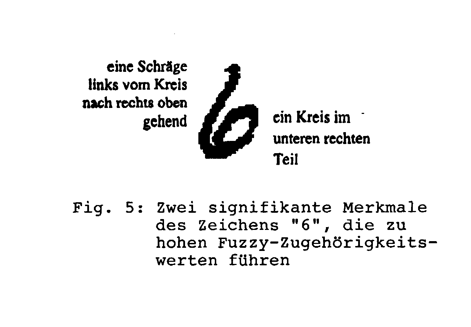

In Fig. 5 sind zwei signifikante Merkmale des Zeichens "6" an einem Beispiel erläutert. Die Fuzzy-Zugehörigkeitswerte für diese Merkmale sind daher hoch. Dementsprechend werden diese Merkmale durch diesen Schritt zur Weiterbetrachtung ausgewählt.

Die Merkmale, die in diesem Schritt nicht für die Weiterbetrachtung ausgewählt werden, stellen keine Eigenschaft der betrachteten Gruppe einer Musterklasse dar. Sie werden daher nicht für die folgende Clusteranalyse ausgewählt. Allerdings bedeutet dies nicht, daß diese Merkmale nicht Bestandteil einer Regel dieser Gruppe werden können. Die hier nicht ausgewählten Merkmale werden im Nachprüfungsschritt betrachtet, um zur Trennung von überlappenden Regeln beizutragen.

### 2.2.3 Die Multiphasen-Clusteranalyse

Der dritte Schritt des Verfahrens, die mehrphasige Clusteranalyse, spielt die entscheidene Rolle im Regelgenerierungsprozeß. Nachdem in den ersten beiden Schritten die Datenmenge reduziert wurde, wird nun eine Fuzzy-Clusteranalyse über die Trainingsvektoren eingeschränkt auf die reduzierte Merkmalsmenge durchgeführt.

Bereits bestehende Verfahren zur Formulierung von Regeln, die auf Fuzzy-Clusteranalysen basieren, benutzen die Fuzzy-Clusteranalyse meist nur zur Findung von Datenclustern, die dann in eine Regel umgewandelt werden. Dies wird im hier dargestellten Verfahren ebenfalls durchgeführt, allerdings ist dies nur ein Teil der hier benutzten Eigenschaften der Clusteranalyse. Zuvor wird die Fuzzy-Clusteranalyse dazu benutzt, die schon reduzierte Merkmalsmenge weiterhin zu verkleinern. Die schon durchlaufene Reduktion der Merkmalsmenge basierte nur auf statistischen Informationen. Mit Hilfe der Clusteranalyse soll nun die Merkmalsmenge noch weiter reduziert werden, bis nur noch für die betrachtete Gruppe einer Musterklasse relevante Merkmale übrig sind. "Relevante Merkmale" bedeuten in diesem Zusammenhang Merkmale, die auch in mindestens einer Regel der Gruppe auftauchen. Es werden also mehrfache Clusteranalysen durchgeführt, wobei die Datenräume in späteren Clusteranalysen, die dann Phasen genannt werden, Unterräume vorheriger Phasen sind. Durch die mehrfache Anwendung der Fuzzy-Clusteranalyse läßt sich der Name der mehrphasigen Clusteranalyse verstehen.

Die erste Phase der Clusteranalyse teilt die Daten der betrachteten Menge in verschiedene Cluster ein. Dazu werden bereits etablierte Verfahren zur Fuzzy-Clusteranalyse, wie zum Beispiel der Fuzzy-$c$-Means-Verfahren oder das vereinfachte Verfahren von Gustafson und Kessel benutzt. Um sicher zu sein, daß eine Clusteranalyse, die die Daten in mehrere Cluster einteilt, überhaupt notwendig ist, wird zunächst überprüft, ob die Datenmenge nicht schon als ein Cluster angesehen werden kann. Ist dies der Fall, so ist eine Clusteranalyse nicht weiter notwendig, und man kann sofort mit dem nächsten Schritt des Verfahrens fortfahren. Dieser Test ist natürlich keine Besonderheit der ersten Clusteranalayse-Phase, sondern wird in jeder Phase vorgenommen. Allerdings tritt dieser Fall sehr selten auf, insbesondere ist er sehr unwahrscheinlich in den anfänglichen Phasen.

Sollte eine Fuzzy-Clusteranalyse notwendig sein, so beginnt man mit dem gewählten Analyse-Verfahren, und zwar üblicherweise mit der Aufgabe, die betrachtete Datenmenge in 2 Cluster einzuteilen. Abhängig von der Anwendung und der implementierten Gruppierungsstrategie muß, wie bei jeder Fuzzy-Clusteranalyse, ein Maximalwert für die Anzahl der zu findenden Cluster angegeben werden. Es zeigt sich, daß ein Maximalwert von vier bzw. fünf ausreicht. Betrachte man nun die Ergebnisse einer Fuzzy-Clusteranalyse der ersten Phase für eine Clusteranalyse, bei der $c$ Cluster zu finden sind: Man erhält die Mittelpunkte der $c$ zu findenden Cluster. Weiterhin werden die korrespondierenden Zugehörigkeitswerte der betrachteten Daten zu den Clustern zurückgegeben. Dies bedeutet also, daß jedes Trainingsmuster der betrachteten Gruppe der Musterklasse einen Fuzzy-Zugehörigkeitswert zu jedem berechneten Cluster erhält.

Wie bereits vorher erwähnt können die berechneten Cluster Regeln entsprechen. Allerdings sind nicht alle Merkmale, die im vorherigen Schritt statistisch ausgewählt wurden, in jedem Cluster wirklich nützlich. Es kann zum Beispiel sein, daß die Daten bezüglich eines Merkmals und einem Cluster über die gesamte Fuzzy-Skala streuen, so daß es keinen Sinn macht, dieses Merkmal in die Regel für dieses Cluster aufzunehmen. Um eine möglichst schnelle Erkennungsleistung des Systems zu garantieren, wird die Anzahl der zu benutzenden Merkmale pro Regel oftmals limitiert, so daß weitere Merkmale aus den Regeln fallen. Es muß nun also eine Merkmalsmenge gefunden werden, die ein bestimmtes Cluster am besten repräsentiert, dabei aber nicht zu viele Merkmale benutzt. Daher wird hier nun für jedes berechnete Cluster eine Bewertung der Merkmale vorgenommen. Zu diesem Zweck wird eine gewichtete Abweichung eingeführt; die Standardabweichung kann nicht benutzt werden, da die Daten Zugehörigkeitswerte zwischen Null und Eins zu den verschiedenen Clustern besitzen. Abhängig von den gewichteten Abweichungen der Daten bezüglich jeweils einem Merkmal für ein Cluster und anderen möglichen Kriterien werden einige Merkmale ausgewählt, die das Cluster repräsentieren. Nach diesem Schritt ist also jedes Cluster durch einige Merkmale charakterisiert, so daß im Prinzip jedes Cluster durch eine Regel beschrieben werden kann.

Nachdem man nun für alle berechneten Cluster repräsentierende Merkmale gefunden hat, so ist nun noch nicht bestimmt, welche Clustereinteilung die Datenmenge bestmöglich eingeteilt hat. Bisher haben die Erfinder nämlich die Daten in verschieden viele Cluster eingeteilt, ohne festzustellen, welche Einteilung die beste war. üblicherweise wird so vorgegangen, daß die verschiedenen Clustereinteilungen derselben Datenmenge global und gänzlich bewertet werden. Um eine gerechtere Bewertung vorzunehmen, schlagen die Erfinder vor, eine weitere Funktion hinzuzunehmen, die nur die Merkmale der einzelnen Cluster betrachtet, die ausgewählt wurden, um das Cluster zu repräsentieren. Durch eine geeignete Bewertungsfunktion kann man dann das optimale $c$ finden, das am besten die betrachtete Datenmenge einteilt.

Nachdem nun die optimale Clusteranzahl gefunden ist, kann man im Prinzip die Regeln für die betrachtete Gruppe der Musterklasse formulieren, da auch schon die Merkmale, die die einzelnen Cluster repräsentieren, ausgewählt sind.

Nun zeigt sich aber meist, daß nicht alle Merkmale, auf die die Clusteranalyse angewendet wurde, auch wirklich ausgewählt wurden, um in mindestens einer Regel dieser Gruppe aufzutauchen. Damit ergibt sich, daß es nicht notwendig war, dieses Merkmal für die Clusteranalyse zu benutzen; ganz im Gegenteil kann es sein, daß dieses Merkmal, das im Endeffekt keinen Einfluß auf die formulierten Regeln besitzt, die Clusteranalyse beeinflußt hat. Daher wird vorgeschlagen, eine weitere Clusteranalyse, eine weitere "Phase", einzuführen, die nur noch die Merkmale betrachtet, die auch ausgewählt wurden, um ein Cluster zu repräsentieren. Die Erfinder nehmen daher für die nächste Phase der Clusteranalyse die Merkmale, die in der vorherigen Phase ausgewählt wurde, um ein Cluster zu repräsentieren. Die Erfinder haben also durch die erste Fuzzy-Clusteranalyse, eine weitere Selektion der Merkmale vorgenommen.

Nun kann die zweite Phase der Multiphasen-Clusteranalyse beginnen. Dabei werden die Schritte der ersten Phase wiederholt, jedoch werden nur noch die Merkmale betrachtet, die für mindestens ein Cluster ausgewählt wurden. Es werden nun analog zur ersten Phase verschiedene Clustereinteilungen für verschiedene $c$ berechnet, und für jedes Cluster werden dann wiederum die das Cluster repräsentierenden Merkmale ausgewählt. Nachdem dann das optimale $c$ gefunden ist, können gegebenenfalls weitere, analoge Phasen folgen. Am Ende der letzten Phase ist man dann in der Lage die so berechneten Cluster der optimalen Clustereinteilung, und die ausgewählten Merkmale, die die Cluster repräsentieren sollen, an den nächsten Schritt, der Regelformulierung in FOHDEL, zu übergeben.

### 2.2.4 Regelformulierung in FOHDEL

Die zuletzt betrachtete Datenmenge sei in c Cluster eingeteilt worden. Die Ergebnisse der mehrphasigen Clusteranalyse sind die Mittelpunkte der Cluster, und die Zugehörigkeitswerte der Datenpunkte zu den einzelnen Clustern. Desweiteren ist zu jedem Cluster die das Cluster repräsentierende Merkmalsmenge bekannt.

Jedes berechnete Cluster bzw. eine Teilmenge des Clusters entsprechend den ausgewählten Merkmalen entspricht einer Regel. Somit werden für die betrachtete Gruppe $c$ Regeln erzeugt. Betrachtet man ein einzelnes Cluster, so werden die ausgewählten Merkmale konjunktiv verknüpft, um die korrespondierende Regel zu formulieren. Da die Zugehörigkeitswerte bezüglich den verschiedenen Merkmalen variieren, wird zu jedem Merkmal ein linguistischer Term assoziiert. Die Berechnung der linguistischen Terme kann sich an den entsprechenden Mittelpunkt bzw. der korrespondierenden Koordinate des Mittelpunktes orientieren. Oftmals ist jedoch die Benutzung von Histogrammen basierend auf den Zugehörigkeitswerten der Daten zu dem Cluster und der Merkmalszugehörigkeit des Datums notwendig. Dadurch ist es möglich, Merkmalen, die ein weites Spektrum der Fuzzy-Skala abdecken, durch eine Kombination mehrerer linguistischer Terme gerecht zu werden, wie zum Beispiel "between medium and high". Die Regeln werden basierend auf diesen Informationen automatisch in der Fuzzy-Beschreibungssprache FOHDEL formuliert.

### 2.3 Die Nachprüfung der Regeln

Da die Regeln bisher unabhängig voneinander für die einzelnen Gruppen der Musterklassen erzeugt wurden, ist es notwendig, die Regeln nachzuprüfen, um sie gegebenenfalls zu verändern. Dabei lassen sich zwei Arten von Konflikten identifizieren. Die erste Möglichkeit ist, daß sich zwei Regeln ähneln oder eine in der anderen enthalten ist, und beide Regeln dieselbe Musterklasse beschreiben; derartige Regeln nennt man "redundant". Die Redundanz von Regeln hat keinen Einfluß auf die Klassifizierungsergebnisse und die Fehlerrate des Systems, jedoch hat sie einen Einfluß auf die Erkennungsgeschwindigkeit. Die zweite Konfliktart tritt auf, wenn ähnelnde Regeln verschiedene Musterklassen beschreiben. Diese Konflikte in der Regelbasis werden als "überlappende" Regeln bezeichnet. Diese überlappungen beschreiben einen Konflikte in der Regelbasis, der die Erkennungsrate des Systems beeinflußt. Um beide Konfliktarten innerhalb der Regelbasis so gut wie möglich auszumerzen, insbesondere aber die überlappungen von Regeln, ist diese Nachprüfung der Regeln erforderlich.

Die beiden Konfliktarten sind in Tabelle 1 zusammengefaßt, wobei die entsprechenden Regeln in der FOHDEL-Sprache formuliert sind. Im Fall (a) sind zwei redundante Regeln, nämlich zwei Regeln für den Buchstaben b: Regel b1 und Regel b2. Der Fall (b) beschreibt zwei überlappende Regeln, da es sich um eine Regel für den Buchstaben b handelt, und um eine für den Buchstaben h.

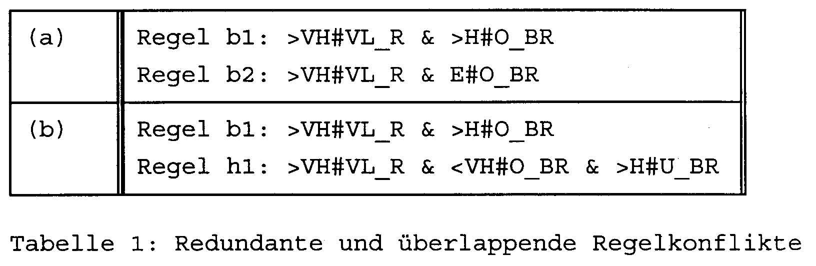

Eine Regel ist genau dann in einer anderen Regel enthalten ist , wenn jedes Merkmal, das in der ersten Regel vorkommt, auch in der zweiten Regel vorkommt, und desweiteren die linguistische Terme der ersten Regel in den korrespondierenden linguistischen Termen der zweiten Regel enthalten sind. Eine Regel ist redundant, falls es eine weitere Regel gibt, wobei die erste Regel in der zweiten enthalten ist, und beide dieselbe Musterklasse beschreiben.

Man könnte nun auf eine ähnliche Art und Weise die Überlappung von Regeln definieren, indem man sagt, daß eine Regel von einer anderen überlappt wird, falls sie in der anderen enthalten ist, und beide Regeln verschiedene Musterklassen beschreiben. Das Problem bei einem derartigen Ansatz ist jedoch, daß man mit einer Fuzzy-Regelbasis arbeitet. Daher kann es passieren, daß, obwohl eine Regel nicht in einer anderen enthalten ist, doch beide Regeln verworfen werden, da sie zu nah beieinander liegen. Falls diese zwei Regeln zwei verschiedene Musterklassen beschreiben, so ist hiermit eine Möglichkeit zur Fehlerkennung gegeben. Anwendungsabhängig wird eine Relation definiert, wann eine Regel durch eine andere überlappt wird. Dabei geht man von einer Definition einer anderen Relation aus, die die Nähe zweier linguistischer Terme beschreibt. Die Definition der Nähe zweier linguistischer Terme hängt hauptsächlich von der zugrundeliegenden Beschreibungssprache, hier FOHDEL, ab, während die Striktheit der Überlappungsrelation von der Anwendung abhängt. Zur Aufhebung des Konfliktes werden dann alle möglichen Merkmale getestet, ob sie zu einer Unterscheidung der Regeln beitragen können.

Die Nachprüfung der Regeln wird solange wiederholt, bis alle Regelpaare überprüft sind. Die automatisch nicht auflösbaren Konflikte werden aufgelistet, so daß der Benutzer Kenntnis möglicher Problemfälle besitzt, die er dann gegebenenfalls weiterbearbeiten (lassen) muß. Dies ist ein Vorteil dieses Ansatzes, denn der Benutzer weiß sofort, daß weitere Merkmale notwendig sind.

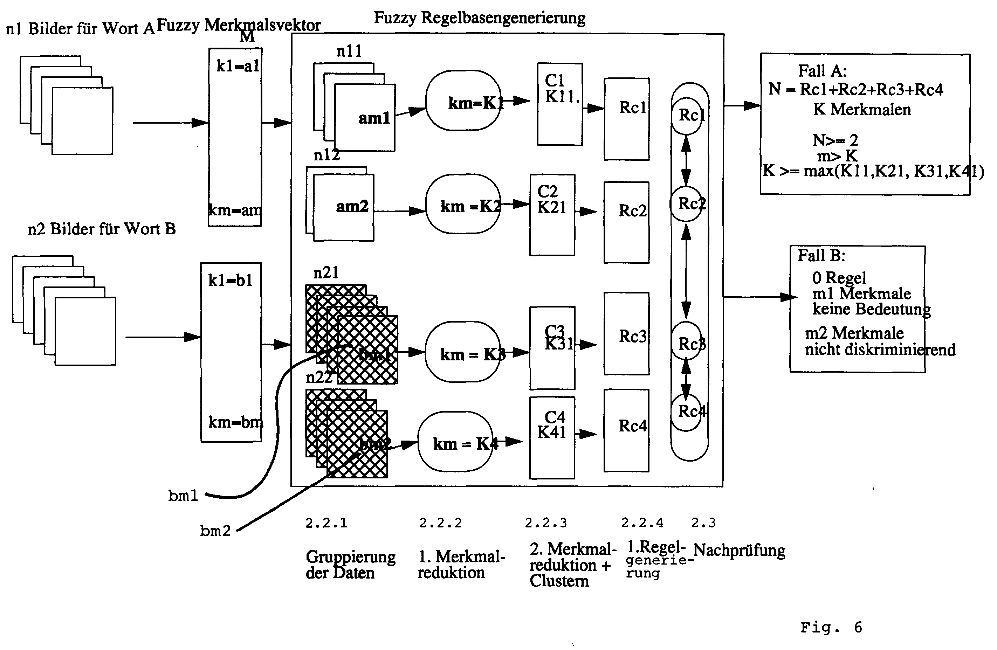

Die Schritte des vorstehend beschriebenen Ausführungsbeispiels sind in Fig. 6 nochmals schematisch wiedergegeben. Die Ziffern unterhalb des Funktionsblocks "Fuzzy Regelbasengenerierung" beziehen sich auf das obige Kapitel.

## Patentansprüche

1. Verfahren zur automatischen Generierung eines Klassifikators für die maschinelle Datenauswertung einer Vielzahl von Datenkomplexen, insbesondere Bilddatenkomplexen, die jeweils durch eine große Anzahl von Merkmalen spezifizierbar sind, mit den folgenden Schritten
- Vorgeben einer Vielzahl von Varianten für jeden zu erkennenden Datenkomplex,
- Vorgeben mehrerer Merkmale zur Analyse sämtlicher Datenkomplexe,
- Analysieren der Varianten der Datenkomplexe durch Bewertung, in welchem Ausmaß innerhalb eines vorgebbaren Wertebereichs die Analysemerkmale gegeben sind,
- anhand der Werte der Analysemerkmale für die Varianten jedes Datenkomplexes Aufstellen von Bedingungssätzen mit jeweils mehreren Bedingungen, bei deren Erfüllung mit einer vorgebbaren Mindestwahrscheinlichkeit davon ausgegangen werden kann, daß der betreffende Datenkomplex erkannt wird,
- Komprimieren der Bedingungssätze, sofern sich anhand der Werte der Analysemerkmale ergibt, daß bestimmte Merkmale für die Erkennung eines Datenkomplexes weniger relevant bzw. irrelevant sind,
- Aufstellen von Bedingungssätzen für jeden zu erkennenden Datenkomplex und Komprimieren jedes Bedingungssatzes,
- Untersuchen der Bedingungssätze sämtlicher zu erkennender Datenkomplexe zwecks Ermittlung, ob die vorgegebenen Merkmale zur Erkennung der Datenkomplexe ausreichend sind oder nicht und/oder welche Merkmale zur Erkennung der Datenkomplexe benötigt werden und welche nicht, und
- Komprimieren der Bedingungssätze für sämtliche zu erkennenden Datenkomplexe durch Verwendung lediglich der benötigten Merkmale.

2. Datenkomplex-Erkennung, insbesondere Bilderkennung, unter Verwendung eines nach Anspruch 1 generierten Klassifikators, mit den folgenden Schritten
- Eingeben der Werte für die Analysemerkmale eines zu erkennenden Datenkomplexes in den Klassifikator und
- Ausgeben sämtlicher erkannter Datenkomplexe mit einem die Güte der Datenkomplex-Erkennung spezifizierenden Wert.
